# EUROPÄISCHE PATENTANMELDUNG

(11) **EP 2 955 390 A1**
(43) Veröffentlichungstag der Anmeldung: **16.12.2015**
(21) Anmeldenummer: 15167431.4
(22) Anmeldetag: 12.05.2015
(51) Int. Cl.: F15B 15/14, F15B 7/08, B60T 11/236

(54) **GEBERZYLINDER FÜR EIN HYDRAULISCHES SYSTEM**

(30) Priorität: 10.06.2014 DE 102014211002
(71) Anmelder: Schaeffler Technologies AG & Co. KG, 91074 Herzogenaurach (DE)
(72) Erfinder: Niesen, Thomas, 76227 Karlsruhe (DE); Bösch, Thorsten, 79292 Pfaffenweiler (DE)

(57) **Zusammenfassung**

Die vorliegende Erfindung betrifft einen Geberzylinder, insbesondere für ein hydraulisches Kupplungssystem eines Kraftfahrzeugs, mit einem in einem Gehäuse entlang einer Längsachse axial beweglichen Kolben (12), der zumindest eine Dichtungsanordnung (14), aufweisend eine Armierung (16) und eine Dichtung (18), insbesondere Primärdichtung, aufnimmt, wobei die Dichtungsanordnung (14) mittels eines Zentrierrings (20) am Kolben (12) fixiert ist, dadurch gekennzeichnet, dass der Zentrierring (20) einen ersten Abstützbereich (28) zum axialen Abstützen des Zentrierrings (20) an dem Kolben (12), einen zweiten Abstützbereich (30) zum axialen Abstützen der Dichtungsanordnung (14) und einen Aufnahmebereich (32) zum radialen Aufnehmen der Dichtungsanordnung (14) aufweist, wobei der erste Abstützbereich (28) zum axialen Abstützen des Zentrierrings (20) an dem Kolben (12) gegenüber dem Aufnahmebereich (32) zum radialen Aufnehmen der Dichtungsanordnung (14) axial in Richtung zu dem Kolben (12) hervorsteht, und dass der Kolben (12) einen ersten Abstützbereich (34) zum axialen Abstützen der Dichtungsanordnung (14) und einen zweiten Abstützbereich (36) zum axialen Abstützen des Zentrierrings (20) aufweist, wobei der erste Abstützbereich (34) gegenüber dem zweiten Abstützbereich (36) axial in Richtung des Zentrierrings (20) hervorsteht.

## Beschreibung

Die vorliegende Erfindung betrifft einen Geberzylinder für ein hydraulisches System, insbesondere für ein hydraulisches Kupplungssystem in einem Kraftfahrzeug. Die vorliegende Erfindung betrifft ferner ein Verfahren zum Herstellen eines Geberzylinders sowie ein hydraulisches System, insbesondere ein hydraulisches Kupplungssystem.

Bei hydraulischen Systemen sind oftmals hydraulische Geberzylinder vorgesehen, um hydraulische Nehmerzylinder mit Hydraulikflüssigkeit zu versorgen und so ein hydraulisches Bauteil anzusteuern. Geberzylinder für eine hydraulisch betätigte Kupplung von Fahrzeugen, beispielsweise, weisen oftmals einen Zylinder auf, der in einem Gehäuse axial verlagerbar geführt ist. Dabei kann der Geberzylinder gegebenenfalls über eine Kolbenstange mit einem manuell zu betätigenden Pedal oder mit einem elektromagnetisch oder hydraulisch betätigten Aktor verbunden sein, um so eine hydraulische Betätigung zu bewerkstelligen.

Im Detail kann ein Geberzylinder einen Kolben aufweisen, an dem ein Zentrierring positioniert ist, der eine Dichtungsarmierung und eine Dichtung trägt. Um derartige Geberzylinder herzustellen ist das folgende Verfahren bekannt.

Zunächst werden die Dichtungsarmierung und die Primärdichtung in eine Matrize gelegt, die als Montagehilfe dient. Der Zentrierring wird dann mit einem kleineren Durchmesser voran auf die Dichtung mit der Matrize gesteckt und verpresst, wodurch das Dichtungspaket auf den Zentrierring geschoben wird. Anschließend wird die Unterbaugruppe bestehend aus Zentrierring, Armierung und Primärdichtung auf den Kolben gesetzt und die Komponenten werden dann wiederum miteinander verpresst.

Nachteilig ist hierbei, dass nach der Montage das Dichtungspaket einen relativen Abstand zu dem Kolben aufweisen kann und es zu einer relativen Verschiebung des Dichtungspaketes auf dem Zentrierring kommen kann. Um dies zu verhindern, ist in der Produktion ein Druckstoß von der primären Druckraumseite vorgesehen, der dazu dient das Dichtungspaket in Richtung Kolben zu drücken und so den relativen Abstand zwischen Kolben und Dichtungspaket zu nivellieren.

Hiervon ausgehend ist es die Aufgabe der vorliegenden Erfindung, die aus dem Stand der Technik bekannten Nachteile zumindest teilweise zu überwinden. Es ist insbesondere die Aufgabe der Erfindung, einen Geberzylinder und ein Verfahren zum Herstellen eines Geberzylinders zu schaffen, das einfacher und/oder mit einer reduzierten Anzahl an Arbeitsschritten durchzuführen ist.

Die Lösung der Aufgabe erfolgt erfindungsgemäß durch einen Geberzylinder mit den Merkmalen des Anspruchs 1. Die Lösung der Aufgabe erfolgt erfindungsgemäß ferner durch ein Verfahren mit den Merkmalen des Anspruchs 6. Bevorzugte Ausgestaltungen der Erfindung sind in den Unteransprüchen angegeben, wobei in der nachfolgenden Beschreibung genannte Merkmal einzeln oder in Kombination Gegenstand der Erfindung sein können, sofern sich aus dem Kontext nicht explizit das Gegenteil ergibt

Der erfindungsgemäße Geberzylinder dient insbesondere einem Einsatz in einem hydraulischen Kupplungssystem eines Kraftfahrzeugs und umfasst einen in einem Gehäuse entlang einer Längsachse axial beweglichen Kolben, der zumindest eine Dichtungsanordnung, aufweisend eine Armierung und eine Dichtung, insbesondere Primärdichtung, insbesondere eine mittels einer Armierung fixierte Dichtung, aufnimmt, wobei die Dichtungsanordnung mittels eines Zentrierrings an dem Kolben fixiert ist. Dabei umfasst der Zentrierring einen ersten Abstützbereich zum axialen Abstützen des Zentrierrings an dem Kolben, einen zweiten Abstützbereich zum axialen Abstützen der Dichtungsanordnung und einen Aufnahmebereich zum radialen Aufnehmen der Dichtungsanordnung, wobei der erste Abstützbereich zum axialen Abstützen des Zentrierrings an dem Kolben gegenüber dem Aufnahmebereich zum radialen Aufnehmen der Dichtungsanordnung axial in Richtung zu dem Kolben hervorsteht. Weiterhin umfasst der Kolben einen ersten Abstützbereich zum axialen Abstützen der Dichtungsanordnung und einen zweiten Abstützbereich zum axialen Abstützen des Zentrierrings, wobei der erste Abstützbereich gegenüber dem zweiten Abstützbereich axial in Richtung des Zertrierrings hervorsteht.

Ein derartiger Geberzylinder ist insbesondere ein hydraulischer Geberzylinder mit bewegten Dichtungen aus dem Anwendungsbereich der Ausrücksysteme beziehungsweise Einrücksysteme von Kupplungen. Er dient dazu, insbesondere in der Produktion des Geberzylinders, der auch als CMC bezeichnet werden kann, eine robuste Fertigung und eine Reduzierung von Ausschuss aufgrund einer fehlerhaften Leerweg-Messung zu vermeiden. Unter einem Leerweg kann dabei insbesondere die Strecke bezeichnet werden, die der Kolben des Geberzylinders verfahren kann, ohne dass es zu einer Abdichtung des primären zum sekundären Druckraum kommt. Darüber hinaus kann der Geberzylinder besonders einfach herstellbar sein.

Hierzu umfasst der vorbeschriebene Geberzylinder einen in einem Gehäuse entlang einer Längsachse axial beweglichen Kolben. Diese Ausgestaltung ist für Geberzylinder weitläufig bekannt und wird daher nicht im Detail beschrieben. Dabei nimmt der Kolben zumindest eine Dichtung und eine Armierung auf, wobei die Dichtung mittels der Armierung fixiert sein kann. Die Dichtung ist dabei insbesondere eine Primärdichtung, wie sie dem Fachmann ebenfalls bekannt ist, und kann etwa aus einem Elastomer ausgestaltet sein. Die Armierung kann dabei insbesondere unmittelbar benachbart zu der Dichtung angeordnet sein und die Dichtung beispielsweise mechanisch schützen und in Position halten. Beispielsweise kann die Armierung die Dichtung an einem Umklappen hindern und so eine gute Dichtwirkung sicherstellen. Eine derartige Armierung ist dem Fachmann ebenfalls grundsätzlich bekannt und kann beispielsweise ebenfalls aus einem Kunststoff ausgestaltet sein. Dadurch kann die Dichtungsanordnung besonders stabil und langlebig sein.

Die Dichtungsanordnung, unter der im Weiteren insbesondere eine Anordnung aus der eigentlichen Dichtung und der Armierung verstanden werden soll, ist dabei in an sich bekannter Weise durch einen Zentrierring am Kolben fixiert. Beispielsweise kann die Dichtungsanordnung zwischen dem Kolben und dem Zentrierring angeordnet sein, wobei der Zentrierring an dem Kolben befestigt sein kann. Dadurch kann die Dichtungsanordnung ebenfalls sicher befestigt sein und einer sicheren und langlebigen Dichtungswirkung dienen.

Bezüglich des Zentrierrings dient dieser insbesondere in an sich bekannter Weise dazu, einen definiert geführten Lauf des Kolbens zu gewährleisten und so das gewünschte Arbeiten des Geberzylinders zu verbessern.

Der Zentrierring weist dabei einen ersten Abstützbereich zum axialen Abstützen des Zentrierrings an dem Kolben und einen zweiten Abstützbereich zum axialen Abstützen der

Dichtungsanordnung, insbesondere der Dichtung, und einen Aufnahmebereich zum radialen Aufnehmen der Dichtungsanordnung auf.

Der erste Abstützbereich zum axialen Abstützen des Zentrierrings an dem Kolben kann insbesondere eine Anlage sein, an welcher sich der Zentrierring in einem an dem Kolben fixierten Zustand an dem Kolben abstützt. Dieser Abstützbereich kann somit insbesondere axial mit Bezug auf den Kolben und damit in der Verfahrrichtung des Kolbens wirken. Der zweite Abstützbereich dient insbesondere zum axialen Abstützen der Dichtungsanordnung und dabei insbesondere zum Abstützen der Dichtung in einem Zustand, in welchem der Zentrierring an dem Kolben befestigt ist. Diese Abstützung wirkt dabei ebenfalls in der Verfahrrichtung des Kolbens und ist dabei in Richtung des Kolbens ausgerichtet. Dabei wird insbesondere die eigentliche Dichtung abgestützt, da die Armierung ausgehend von der Dichtung vorzugsweise in Richtung des Kolbens angeordnet ist. Der Aufnahmebereich zum radialen Aufnehmen der Dichtungsanordnung, also der Dichtung und der Armierung, ist dabei insbesondere ein Bereich, der in axialer Richtung der Breite der Dichtungsanordnung, also insbesondere der Breite der Armierung und der Dichtung, entsprechen kann, wenn der Zentrierring die Dichtungsanordnung in gewünschter Weise an dem Kolben fixiert, und dabei in radialer Richtung die Dichtungsanordnung abstützt beziehungsweise aufnimmt. Somit kann der Aufnahmebereich insbesondere an dem dem Kolben zugewandten seitlichen Ende der Armierung enden.

Weiterhin ist es bei dem vorbeschriebenen Geberzylinder vorgesehen, dass der Kolben einen ersten Abstützbereich zum axialen Abstützen der Dichtungsanordnung und einen zweiten Abstützbereich zum axialen Abstützen des Zentrierrings aufweist. Somit weist der Kolben zumindest zwei voneinander verschiedene Bereiche auf, die zum Abstützen der Dichtungsanordnung, insbesondere zum Abstützen der Armierung, beziehungsweise zum Abstützen des Zentrierrings vorgesehen sind. Dabei wirken diese Abstützbereiche wiederum in axialer Richtung also insbesondere in einer Verfahrrichtung des Kolbens.

Bei einem vorbeschriebenen Geberzylinder ist es dabei ferner vorgesehen, dass der erste Abstützbereich des Zentrierrings zum axialen Abstützen des Zentrierrings an dem Kolben gegenüber dem Aufnahmebereich des Zentrierrings zum radialen Aufnehmen der Dichtungsanordnung axial in Richtung zu dem Kolben hervorsteht. Es ist ferner vorgesehen, dass der erste Abstützbereich des Kolbens gegenüber dem zweiten Abstützbereich des Kolbens axial in Richtung zu dem Zentrierring hervorsteht. Diese Anordnung kann insbesondere bezüglich einer Herstellbarkeit des Geberzylinders signifikante Vorteile mit sich bringen, wie das nachstehend im Detail beschrieben ist.

Im Detail kann das Herstellungsverfahren durch eine Reduktion der durchzuführenden Schritte einfacher und kostengünstiger ermöglicht werden und dabei einen höheren zeitichen Durchsatz ermöglichen. So weist ein herkömmliches Verfahren zum Herstellen eines Geberzylinders oftmals für die Montage der Anordnung umfassend den Kolben, den Zentrierring und die Dichtungsanordnung aufweisend die Dichtung und die Armierung die folgenden Prozessschritte auf. Nach einem Einlegen von Dichtungsarmierung und Dichtung in eine Matrize wird der Zentrierring mit dem kleineren Durchmesser voran auf die Dichtung mit der Matrize gesteckt und verpresst, woraufhin die Unterbaugruppe aufweisend Zentrierring, Armierung und Primärdichtung auf den Kolben gesetzt und die Unterbaugruppe erneut verpresst wird.

Um zu verhindern, dass nach der Montage das Dichtungspaket einen relativen Abstand zum Kolben aufweist und es so zu einer relativen Verschiebung des Dichtungspaketes auf dem Zentrierring kommt, ist in der Produktion momentan ein Druckstoß von der primären Druckraumseite vorgesehen, der dazu dient, das Dichtungspaket in Richtung Kolben zu drücken und so den relativen Abstand zwischen Kolben und Dichtungspaket zu nivellieren. Ein derartiger Druckstoß ist durch die vorbeschriebene Ausgestaltung des Geberzylinders nicht mehr notwendig, da bei einem Einfügen und Verpressen des Zentrierrings in dem Kolben die Dichtungsanordnung automatisch in ihre Position verbracht und verpresst wird. Somit kann durch die vorbeschriebene Ausbildung zumindest ein Arbeitsschritt bei der Herstellung des Geberzylinders entfallen.

Die hier vorbeschriebene Lösung kann nämlich konstruktiv den notwendigen Druckimpuls umgehen, der bei den Lösungen aus dem Stand der Technik notwendig war, um einen Kontakt zwischen Dichtungsanordnung und Kolben zu gewährleisten. Durch die vorbeschriebene Ausgestaltung der Anlageflächen für Kolben, Dichtungsanordnung und Zentrierring und somit durch eine Verlängerung der statischen Dichtfläche am Zentrierring und ferner einen Absatz in der Geometrie des Kolbens, der die verlängerte statische Dichtfläche des Zentrierringes aufnimmt, kann auf einfache Weise die Einpresstiefe des Zentrierringes in den Kolben verlängert werden, wodurch der Kolben bei der Montage mit dem Zentrierring die Dichtungsanordnung in die korrekte Position schiebt und so der Kontakt zwischen Kolben und Dichtungsanordnung beziehungsweise Dichtung gewährleistet ist. In anderen Worten kann die Dichtungsanordnung bei einer Montage vor dem Kolben hergeschoben werden, wodurch die Spiele zwischen Kolben und Dichtungspaket sowie zwischen den Bestandteilen des Dichtungspaktes selbst ausgeglichen werden. Hierdurch entfällt die Notwendigkeit, einen zusätzlichen Druckimpuls durchzuführen. So lässt sich die Taktzeit in der Fertigung erhöhen.

Es kann somit durch die bloße Ausgestaltung des Geberzylinders, und dabei insbesondere des Kolbens und des Zentrierrings, verhindert werden, dass eine relative Verschiebung des Dichtungspaketes während der Herstellung auf dem Zentrierring zu einer Verschlechterung des definierten Leerweges führt. Der Leerweg definiert hierbei die Strecke, den der Kolben durchfährt ohne dass ein Druckunterschied zwischen primärem und sekundärem Druckraum auftritt. Sobald diese Strecke, ausgehend von einer vollständig ausgefahrenen Kolbenstange durchfahren ist sind die Druckräume voneinander getrennt und es erfolgt ein Druckaufbau im primären Druckraum.

Dabei sind die vorgenannten Vorteile insbesondere auf einfache Weise ausbildbar ohne das Benötigen neuer Werkzeuge oder neuartiger Prozesse. Durch nur leichte Änderungen an vorhandenen Werkzeugen können die vorbeschriebenen Geberzylinder problemlos auf bestehenden Werkzeugen hergestellt beziehungsweise die Herstellung in bestehende Prozessumgebungen integriert werden.

In einer vorteilhaften Ausgestaltung des Geberzylinders kann der Zentrierring einen Vorsprung aufweisen, der zum Fixieren des Zentrierrings an dem Kolben in eine Ausnehmung des Kolbens eingreift. Insbesondere in dieser Ausgestaltung kann eine verbesserte Herstellbarkeit gegeben sein, da auf diese Weise konstruktiv einfach ermöglicht wird, dass die entsprechenden Anlagen beziehungsweise Abstützungen des Kolbens und des Zentrierrings miteinander in Eingriff kommen beziehungsweise miteinander wechselwirken.

Dabei kann eine vorbeschriebene Ausgestaltung auf besonders einfache Weise realisiert werden, wenn es vorgesehen ist, dass die Ausnehmung des Kolbens zentrierringseitig einen ersten Innendurchmesser D_{K1} aufweist, außerhalb dessen der erste Abstützbereich angeordnet ist, und dass die Ausnehmung des Kolbens benachbart zu dem ersten Innendurchmesser D_{K1} und in einer dem Zentrierring abgewandten Richtung des ersten Innendurchmessers D_{K1} einen zweiten Innendurchmesser D_{K2} aufweist. Dabei ist der erste Innendurchmesser D_{K1} größer als der zweite Innendurchmesser D_{K2}, so dass der zweite Abstützbereich innerhalb des Innendurchmessers D_{K1} und außerhalb des Innendurchmessers D_{K2} angeordnet ist.

Zusätzlich oder alternativ kann es bevorzugt sein, dass der Abstützbereich zum axialen Abstützen des Zentrierrings an dem Kolben innerhalb eines ersten Durchmessers D_{Z1} des Zentrierrings vorliegt, und dass der Aufnahmebereich zum radialen Aufnehmen der Dichtungsanordnung außerhalb eines Durchmesser D_{Z2} des Zentrierrings vorliegt, wobei der Durchmesser D_{Z1} kleiner oder gleich dem Durchmesser D_{Z2} ist.

Insbesondere in den vorgenannten vorteilhaften Ausgestaltungen können die vorbeschriebenen Vorteile auf besonders einfache Weise realisiert werden. Denn die Ausgestaltung von Zentrierring und Kolben braucht nur durch kleinste Änderungen angepasst werden, wobei ein Funktionieren in herkömmlicher Umgebung, wie insbesondere in bekannten Gehäusen und ähnlichem problemlos möglich ist. Somit wird die Funktionalität im Wesentlichen nicht verändert, so dass keine weiteren Anpassungen notwendig sind. Im Detail brauchen in den Zentrierring beziehungsweise in den Kolben lediglich kleinere Abstufungen eingebracht zu werden, um die entsprechenden Abstützungen auszuformen derart, dass auf den Druckstoß bei der Herstellung des Geberzylinders, wie dies vorstehend im Detail beschrieben ist, verzichtet werden kann.

Dabei kann es besonders bevorzugt sein, wenn der Durchmesser D_{Z1} kleiner als der Durchmesser D_{Z2} ist und wenn der Zentrierring zwischen dem ersten Durchmesser D_{Z1} und dem zweiten Durchmesser D_{Z2} abgeschrägt ist. In dieser Ausgestaltung kann das Herstellungsverfahren noch weiter vereinfacht werden, da aufgrund der Abschrägung ein besonders einfaches Aufstecken der Dichtungsanordnung auf den Zentrierring ermöglicht wird. Somit kann die Gefahr von fehlerhaft hergestellten Geberzylindern beziehungsweise ein dadurch auftretender Ausschuss noch weiter reduziert werden.

Mit Bezug auf weitere technische Vorteile und Merkmale des Geberzylinders wird hiermit explizit auf die Erläuterungen im Zusammenhang mit dem Verfahren, dem hydraulischen System, den Figuren sowie der Figurenbeschreibung verwiesen.

Die vorliegende Erfindung betrifft ferner ein Verfahren zum Herstellen eines Geberzylinders, insbesondere zum Herstellen eines Geberzylinders, wie dieser vorstehend im Detail beschrieben ist, aufweisend die Verfahrensschritte: a) Bereitstellen eines Zentrierrings, wobei der Zentrierring einen ersten Abstützbereich zum axialen Abstützen des Zentrierrings an einem Kolben, einen zweiten Abstützbereich zum axialen Abstützen einer Dichtungsanordnung und einen Aufnahmebereich zum radialen Aufnehmen der Dichtungsanordnung aufweist, wobei der erste Abstützbereich zum axialen Abstützen des Zentrierrings an dem Kolben gegenüber dem Aufnahmebereich zum radialen Aufnehmen der Dichtungsanordnung axial in die dem ersten Abstützbereich zum axialen Abstützen einer Dichtungsanordnung entgegengesetzte Richtung hervorsteht; b) Anordnen einer Dichtungsanordnung an dem Aufnahmebereich; und c) Anordnen des Zentrierrings an einem Kolben, wobei der Kolben einen ersten Abstützbereich zum axialen Abstützen der Dichtungsanordnung und einen zweiten Abstützbereich zum axialen Abstützen des Zentrierrings aufweist, wobei der erste Abstützbereich gegenüber dem zweiten Abstützbereich axial in Richtung des Zentrierrings hervorsteht.

Insbesondere durch das vorbeschriebene Verfahren kann ein Geberzylinder besonders einfach und kostengünstig hergestellt werden. Im Detail kann das vorbeschriebene Verfahren durch die konstruktive Ausgestaltung der entsprechenden Bauteile, wie dies vorstehend beschrieben ist, den gemäß dem Stand der Technik notwendigen Druckimpuls umgehen, um einen Kontakt zwischen der Dichtungsanordnung und dem Kolben zu gewährleisten. Durch das vorbeschriebene Verfahren kann somit auf einen im Stand der Technik oftmals notwendigen Prozessschritt verzichtet werden. Ferner kann vorteilhaft auf das Vorsehen einer Matrize verzichtet werden, was das Verfahren weiterhin besonders kostengünstig gestalten kann. So lässt sich die Taktzeit in der Fertigung erhöhen.

Mit Bezug auf weitere technische Vorteile und Merkmale des Verfahrens wird hiermit explizit auf die Erläuterungen im Zusammenhang mit dem Geberzylinder, dem hydraulischen System, den Figuren sowie der Figurenbeschreibung verwiesen.

Die vorliegende Erfindung betrifft ferner ein hydraulisches System, insbesondere ein hydraulisches Kupplungssystem, welches einen Geberzylinder aufweist, wie dieser vorstehend im Detail beschrieben ist. Ein derartiges hydraulisches System kann beispielsweise in einem Fahrzeug angeordnet sein und dabei beispielsweise eine Doppelkupplung aufweisen. Ein derartiges System kann zusammenfassend besonders einfach und kostengünstig herstellbar sein.

Mit Bezug auf weitere technische Vorteile und Merkmale des hydraulischen Systems wird hiermit explizit auf die Erläuterungen im Zusammenhang mit dem Geberzylinder, dem Verfahren, den Figuren sowie der Figurenbeschreibung verwiesen.

Im Folgenden wird ein besonders bevorzugtes Ausführungsbeispiel der Erfindung anhand der beiliegenden Zeichnungen erläutert, wobei explizit darauf hingewiesen wird, dass der erfindungsgemäße Gegenstand nicht auf das beschriebene Ausführungsbeispiel beschränkt ist Dabei zeigen:
Fig. 1 eine schematische Darstellung einer Anordnung aufweisend einen Kolben und einen Zentrierring mit einer Dichtungsanordnung für einen Geberzylinder gemäß der Erfindung; und
Fig. 2. eine vergrößerte Ansicht der Ausgestaltung aus Fig. 1.

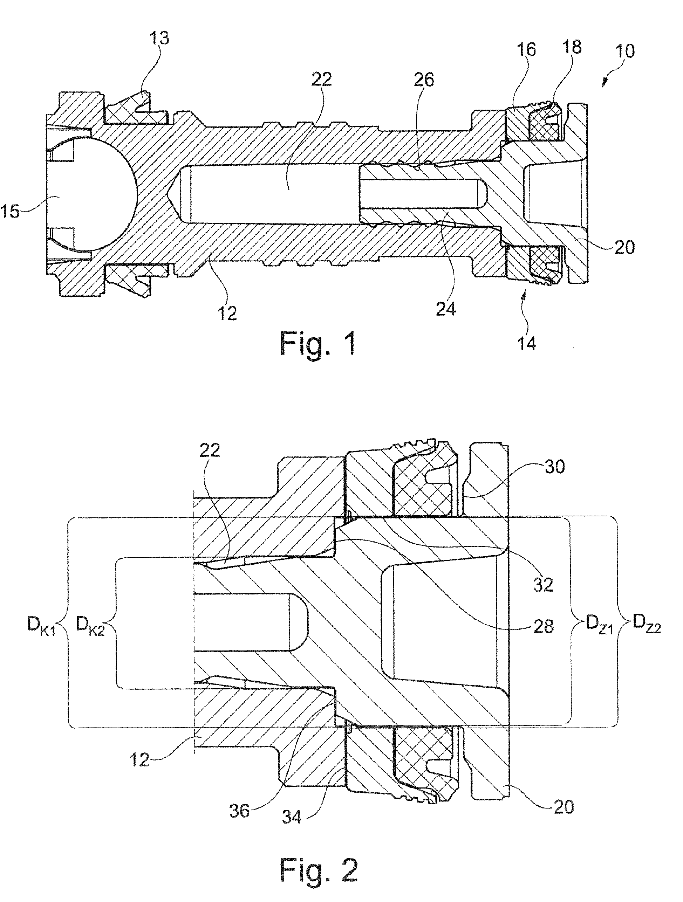

Fig. 1 zeigt in schematischer Darstellung und in nicht beschränkender Weise ein Ausführungsbeispiel einer Kolbenanordnung 10 für einen erfindungsgemäßen Geberzylindereines hydraulischen Systems. Ein derartiges hydraulisches System kann beispielsweise Bestandteil sein eines hydraulischen Kupplungssystems, etwa eines Kraftfahrzeugs.

Die Kolbenanordnung 10 umfasst einen in einem nicht gezeigten Gehäuse entlang einer Längsachse axial beweglichen Kolben 12, der zumindest eine Dichtungsanordnung 14, aufweisend eine mittels einer Armierung 16 fixierte Dichtung 18, insbesondere Primärdichtung, aufnimmt. Die Dichtungsanordnung 14 kann dabei in an sich bekannter Weise dazu dienen, einen Primarräum von einem Sekundärraum abzudichten, wie dies grundsätzlich bekannt ist. Dabei ist die Dichtungsanordnung 14 mittels eines Zentrierrings 20 am Kolben 12 fixiert. Beispielsweise kann der Zentrierring 20 in eine Ausnehmung 22 des Kolbens 12 eingreifen und dort fixiert sein. Hierzu kann der Zentrierring 20 beispielsweise einen Vorsprung 24 mit einer Tannenbaumgeometrie 26 aufweisen.

Ferner ist in Figur 1 gezeigt, dass an dem Kolben 12 weiterhin eine Sekundärdichtung 13 und eine Aufnahme 15, etwa für ein Gestänge, für eine mechanische Betätigung des Kolbens 12 vorgesehen ist.

Der Zentrierring 20 weist einen ersten Abstützbereich 28 zum axialen Abstützen des Zentrierrings 20 an dem Kolben 12, einen zweiten Abstützbereich 30 zum axialen Abstützen der Dichtungsanordnung 14 und einen Aufnahmebereich 32 zum radialen Aufnehmen der Dichtungsanordnung 14 auf, wobei der erste Abstützbereich 28 zum axialen Abstützen des Zentrierrings an dem Kolben 12 gegenüber dem Aufnahmebereich 32 zum radialen Aufnehmen der Dichtungsanordnung 14 axial in Richtung zu dem Kolben 12 hervorsteht. Weiterhin weist der Kolben 12 einen ersten Abstützbereich 34 zum axialen Abstützen der Dichtungsanordnung 14 und einen zweiten Abstützbereich 36 zum axialen Abstützen des Zentrierrings 20 auf, wobei der erste Abstützbereich 34 gegenüber dem zweiten Abstützbereich 36 axial in Richtung des Zentrierrings 20 hervorsteht.

Hierzu kann es vorgesehen sein, dass die Ausnehmung 22 des Kolbens 12 zentrierringseitig einen ersten Innendurchmesser D_{K1} aufweist, außerhalb dessen der erste Abstützbereich 34 angeordnet ist und dass die Ausnehmung 22 des Kolbens 12 benachbart zu dem ersten Innendurchmesser D_{K1} und in einer dem Zentrierring 20 abgewandten Richtung ersten Innendurchmessers D_{K1} einen zweiten Innendurchmesser D_{K2} aufweist, wobei der zweite Abstützbereich 36 innerhalb des Innendurchmessers D_{K1} und außerhalb des Innendurchmessers D_{K2} angeordnet ist, wobei der erste Innendurchmesser D_{K1} größer ist als der zweite Innendurchmesser D_{K2}.

Weiterhin kann es bezüglich des Zentrierrings 20 vorgesehen sein, dass der Abstützbereich 28 zum axialen Abstützen des Zentrierrings 20 an dem Kolben 12 innerhalb eines ersten Durchmessers D_{Z1} des Zentrierrings 20 vorliegt, wobei D_{Z1} größer als D_{K2} und kleiner als D_{K1} sein sollte. Ferner liegt der Aufnahmebereich 30 zum radialen Aufnehmen der Dichtungsanordnung 14 außerhalb eines Durchmesser D_{Z2} des Zentrierrings 20 vor, wobei der Durchmesser D_{Z1} kleiner oder gleich dem Durchmesser D_{Z2} sein sollte. Dabei kann es besonders bevorzugt sein, dass der Durchmesser D_{Z1} kleiner als der Durchmesser D_{Z2} ist und der Zentrierring 20 zwischen dem ersten Durchmesser D_{Z1} und dem zweiten Durchmesser D_{Z2} abgeschrägt ist.

### Bezugszeichenliste

- 10: Kolbenanordnung
- 12: Kolben
- 13: Sekundärdichtung
- 14: Dichtungsanordnung
- 15: Aufnahme
- 16: Armierung
- 18: Dichtung
- 20: Zentrierring
- 22: Ausnehmung
- 24: Vorsprung
- 26: Tannenbaumgeometrie
- 28: Abstützbereich
- 30: Abstützbereich
- 32: Aufnahmebereich
- 34: Abstützbereich
- 36: Abstützbereich

## Patentansprüche

1. Geberzylinder, insbesondere für ein hydraulisches Kupplungssystem eines Kraftfahrzeugs, mit einem in einem Gehäuse entlang einer Längsachse axial beweglichen Kolben (12), der zumindest eine Dichtungsanordnung (14), aufweisend eine Armierung (16) und eine Dichtung (18), insbesondere Primärdichtung, aufnimmt, wobei die Dichtungsanordnung (14) mittels eines Zentrierrings (20) an dem Kolben (12) fixiert ist, **dadurch gekennzeichnet, dass** der Zentrierring (20) einen ersten Abstützbereich (28) zum axialen Abstützen des Zentrierrings (20) an dem Kolben (12), einen zweiten Abstützbereich (30) zum axialen Abstützen der Dichtungsanordnung (14) und einen Aufnahmebereich (32) zum radialen Aufnehmen der Dichtungsanordnung (14) aufweist, wobei der erste Abstützbereich (28) zum axialen Abstützen des Zentrierrings (20) an dem Kolben (12) gegenüber dem Aufnahmebereich (32) zum radialen Aufnehmen der Dichtungsanordnung (14) axial in Richtung zu dem Kolben (12) hervorsteht, und dass der Kolben (12) einen ersten Abstützbereich (34) zum axialen Abstützen der Dichtungsanordnung (14) und einen zweiten Abstützbereich (36) zum axialen Abstützen des Zentrierrings (20) aufweist, wobei der erste Abstützbereich (34) gegenüber dem zweiten Abstützbereich (36) axial in Richtung des Zentrierrings (20) hervorsteht.

2. Geberzylinder nach Anspruch 1, **dadurch gekennzeichnet, dass** der Zentrierring (20) einen Vorsprung (24) aufweist, der zum Fixieren des Zentrierrings (20) an dem Kolben (12) in eine Ausnehmung (22) des Kolbens (12) eingreift.

3. Geberzylinder nach Anspruch 2, **dadurch gekennzeichnet, dass** die Ausnehmung (22) des Kolbens (12) zentrierringseitig einen ersten Innendurchmesser D_{K1} aufweist, außerhalb dessen der erste Abstützbereich (34) angeordnet ist, und dass die Ausnehmung (22) des Kolbens (12) benachbart zu dem ersten Innendurchmesser D_{K1} und in einer dem Zentrierring (20) abgewandten Richtung des ersten Innendurchmessers D_{K1} einen zweiten Innendurchmesser D_{K2} aufweist, wobei der erste Innendurchmesser D_{K1} größer ist als der zweite Innendurchmesser D_{K2} und wobei der zweite Abstützbereich (36) innerhalb des Innendurchmessers D_{K1} und außerhalb des Innendurchmessers D_{K2} angeordnet ist.

4. Geberzylinder nach einem der Ansprüche 2 oder 3, **dadurch gekennzeichnet, dass** der Abstützbereich (28) zum axialen Abstützen des Zentrierrings (20) an dem Kolben (12) innerhalb eines ersten Durchmessers D_{Z1} des Zentrierrings (20) vorliegt, und dass der Aufnahmebereich (32) zum radialen Aufnehmen der Dichtungsanordnung (14) außerhalb eines Durchmesser D_{Z2} des Zentrierrings (20) vorliegt, wobei der Durchmesser D_{Z1} kleiner oder gleich dem Durchmesser D_{Z2} ist.

5. Geberzylinder nach Anspruch 4, **dadurch gekennzeichnet, dass** der Durchmesser D_{Z1} kleiner als der Durchmesser D_{Z2} ist und dass der Zentrierring (20) zwischen dem ersten Durchmesser D_{Z1} und dem zweiten Durchmesser D_{Z2} abgeschrägt ist.

6. Verfahren zum Herstellen eines Geberzylinders, insbesondere zum Herstellen eines Geberzylinders nach einem der Ansprüche 1 bis 5, aufweisend die Verfahrensschritte:
a) Bereitstellen eines Zentrierrings, wobei der Zentrierring (20) einen ersten Abstützbereich (28) zum axialen Abstützen des Zentrierrings (20) an einem Kolben (12), einen zweiten Abstützbereich (30) zum axialen Abstützen einer Dichtungsanordnung (14) und einen Aufnahmebereich (32) zum radialen Aufnehmen der Dichtungsanordnung (14) aufweist, wobei der erste Abstützbereich (28) zum axialen Abstützen des Zentrierrings (20) an dem Kolben (12) gegenüber dem Aufnahmebereich (32) zum radialen Aufnehmen der Dichtungsanordnung (14) axial in die dem ersten Abstützbereich (30) zum axialen Abstützen einer Dichtungsanordnung (14) entgegengesetzte Richtung hervorsteht;
b) Anordnen der Dichtungsanordnung (14) an dem Aufnahmebereich (32); und
c) Anordnen des Zentrierrings (20) an einem Kolben, wobei der Kolben (12) einen ersten Abstützbereich (34) zum axialen Abstützen der Dichtungsanordnung (14) und einen zweiten Abstützbereich (36) zum axialen Abstützen des Zentrierrings (20) aufweist, wobei der erste Abstützbereich (34) gegenüber dem zweiten Abstützbereich (36) axial in Richtung des Zentrierrings (20) hervorsteht.

7. Hydraulisches System, insbesondere hydraulisches Kupplungssystem, **dadurch gekennzeichnet, dass** es einen Geberzylinder nach einem der Ansprüche 1 bis 5 aufweist.

8. Hydraulisches System nach Anspruch 7, **dadurch gekennzeichnet, dass** das hydraulische System eine Doppelkupplung aufweist.
